# EUROPEAN PATENT SPECIFICATION

(11) **EP 2 035 246 B1**
(45) Date of publication and mention of the grant of the patent: **23.07.2014**
(21) Application number: 07748583.7
(22) Date of filing: 15.06.2007
(51) Int. Cl.: B60K 15/077, F02M 37/00

(54) **BUFFER TANK AND ALSO VEHICLE**
PUFFERTANK UND AUCH FAHRZEUG
RÉSERVOIR TAMPON ET AUSSI VÉHICULE

(30) Priority: 19.06.2006 SE 0601340
(43) Date of publication of application: 18.03.2009
(73) Proprietor: Scania CV AB, 151 87 Södertälje (SE)
(72) Inventor: LINDVALL, Alexander, SE-155 92 NYKVARN (SE)
(86) International application number: PCT/SE2007/050423
(87) International publication number: WO 2007/149040

(56) References cited:
- EP-A1- 1 529 953
- WO-A1-02/090752
- WO-A1-02/090752
- GB-A- 1 433 875
- GB-A- 1 433 875
- US-A- 4 306 580
- US-A- 5 103 777
- US-A- 6 009 859
- US-A- 6 009 859
- US-B1- 6 718 953
- US-B1- 6 718 953

## Description

### 1. Background

### 1.1 Technical field

The present invention relates to a buffer tank according to the introductory part of the attached claim 1.

### 1.2 State of the art

A buffer tank is used for deaerating return fuel from the engine when it contains large amounts of air. Air drawn into the engine with the fuel affects the running of the engine adversely through affecting the injection time. Feeding return fuel directly back to the main tank is not an alternative in cases where main tanks made of plastic are used, because of high return fuel temperatures and also the engine's sensitivity to backpressure.

A buffer tank for the purpose here concerned which is known from the applicant's own Swedish patent application no. 0203138-3 (WO 2004038210) comprises a tank chamber to which return fuel is led and from which the engine's injection pump draws.

With such a buffer tank it is found that diesel fuel mixed with air is drawn and is supplied to the engine.

Deaeration is effected via a hose leading to a valve block located in the upper portion of the buffer tank and high enough to prevent leakage when there would otherwise be risk of diesel fuel foam or diesel fuel reaching the valves. Despite the location indicated, leakage occurs because different diesel fuel grades produce different amounts of foam.

### 2. Object of the invention

The object of the present invention is to eliminate the shortcomings of known buffer tanks, inter alia so that injection of diesel fuel mixed with air into the engine and leakage in connection with deaeration are prevented.

### 3. Summary of the invention

The object as above is achieved with a buffer tank and a vehicle exhibiting features according to the attached independent claims 1 and 16.

Further advantages are achieved with features according to the dependent claims.

### 4. Brief description of the drawings

The invention is described below in more detail with reference to embodiment examples and the attached drawings, in which
- Fig. 1 depicts a first embodiment of a buffer tank according to the invention in a perspective view as seen obliquely from above,
- Fig. 2 depicts the tank according to Fig. 1 as seen from above,
- Fig. 3 depicts the tank according to Fig. 1 as seen from the right in Fig. 2 and turned 90° clockwise,
- Fig. 4 depicts the tank according to Fig. 1 as seen from below in Fig. 2,
- Fig. 5 depicts the tank according to Fig. 1 as seen from the right in Fig. 4,
- Fig. 6 depicts a detail A according to Fig. 2 with main tank, connection for inlet from main tank, primary tank,
- Fig. 7 depicts a side view corresponding to that according to Fig. 5 but showing in Fig. 7 the location of level regulating means,
- Fig. 8 depicts a sectional view B-B according to Fig. 7,
- Fig. 9 depicts a view from above in Fig. 8 but with a closure of an aperture in the top of the tank removed to make it possible to see parts of the level regulating means, and
- Fig. 10 depicts the level regulating means according to Figs. 7-9 in the form of a detail A according to Fig. 8.

### 5. Detailed description of preferred embodiments

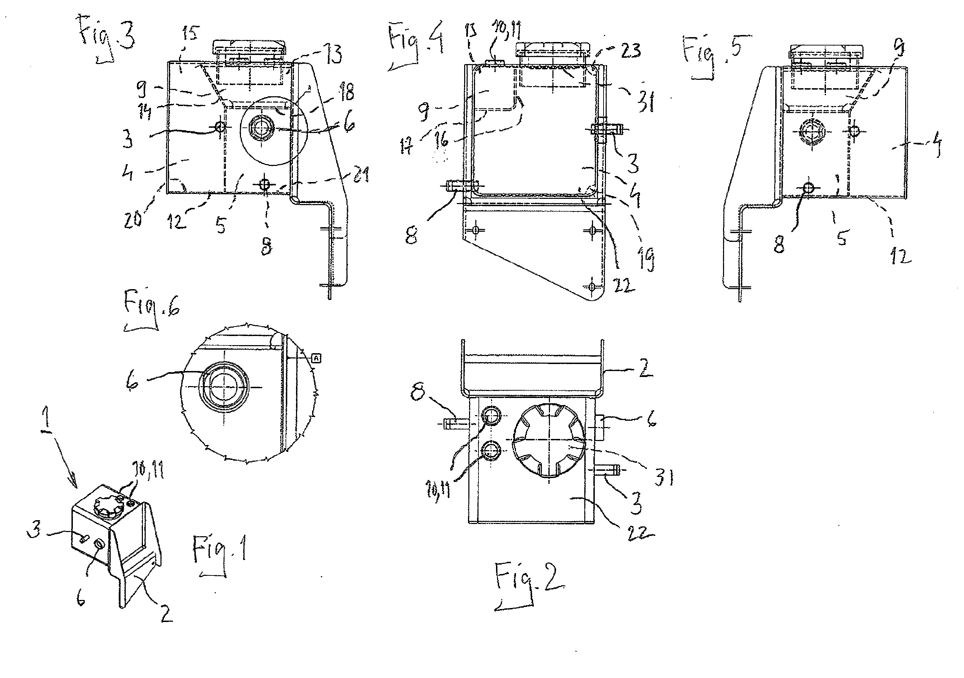

In the drawings, a buffer tank according to the invention is denoted by ref. 1. The buffer tank, as indicated inter alia by Fig. 1, has a substantially parallelepipedic configuration but other configurations adapted to available space are conceivable. It is preferred that the tank 1 has a bracket 2 integrated with it to render the tank easy to fit in an undepicted vehicle.

The buffer tank is preferably intended to form part of a device for fuel transfer of substantially the kind indicated by the previously mentioned Swedish patent application no. 0203138-3.

The buffer tank is thus adapted to the accumulation and, when applicable and in this case normally, to the deaeration of return fuel from a combustion engine, primarily a diesel engine.

The buffer tank has here a first inlet 3 connected to an undepicted return pipe for return fuel from the engine, which first inlet leads into a return fuel chamber 4, a first chamber 4, of the buffer tank.

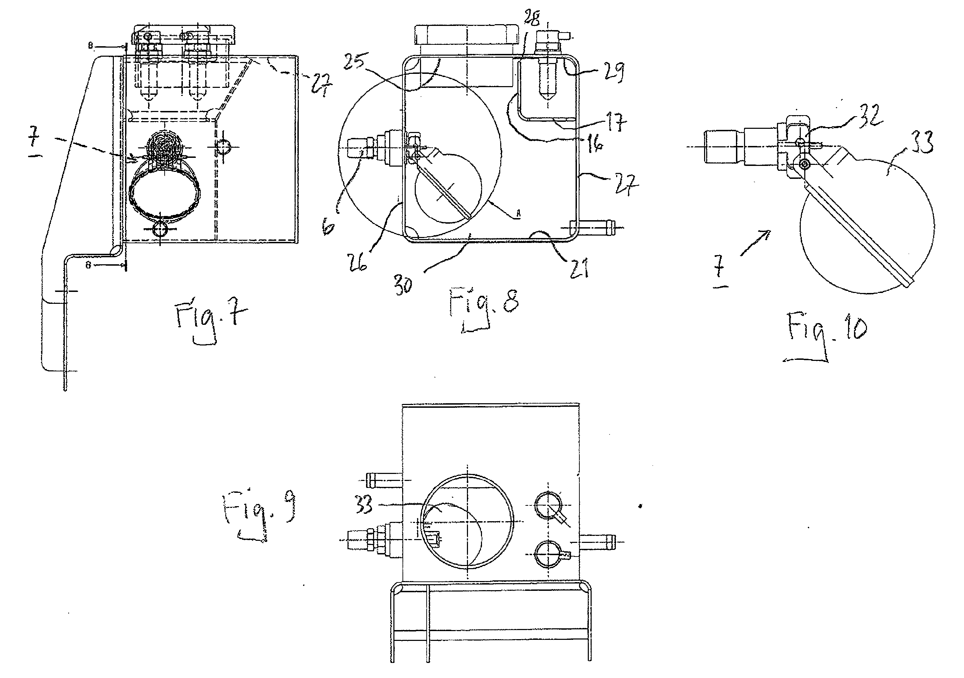

Ref. 5 denotes a second chamber of the buffer tank, which second chamber is connected to a second inlet 6 of the buffer tank which is connected to an undepicted ordinary fuel tank or main tank, a primary fuel tank, for supply of ordinary fuel, primary fuel, to the second chamber. The second chamber is preferably adapted to being in direct air contact with the first chamber and also to being supplied with return fuel from the first chamber. The fuel level in the second chamber is adapted to being regulated by level regulating means 7, see Figs. 7-10, described in more detail below. The second chamber is also connected to an outlet 8 of the buffer tank which is intended to be connected to the engine's undepicted fuel inlet via an undepicted fuel pump for supply of fuel to the engine from the buffer tank.

Ref. 9 denotes a third chamber of the buffer tank, which third chamber is preferably in direct air contact with the second chamber and is adapted to being deaerated by valve means 10 preferably disposed in the top of the third chamber and here preferably comprising at least one directly mounted valve 11.

According to the version depicted, the first chamber and the second chamber are disposed beside one another in the buffer tank and extend upwards from the buffer tank's bottom portion 12. The third chamber is preferably substantially smaller than the other two and is here preferably disposed in an upper corner portion 13 of the buffer tank whereby the third chamber has a wall 14 in common with the first chamber at its upper portion 15 and has a wall 16 and its bottom 17 in common with the second chamber, there is direct air contact between the second and third chambers via the wall 16, and said bottom 17 constitutes part of the second chamber's upper delineating surface 18 and is preferably adapted to draining of the third chamber, e.g. via undepicted holes.

The first chamber is also in direct air contact with the second chamber, from which, according to preferred versions, air supplied via return fuel has to be moved to the third chamber. As depicted in, for example, Fig. 4, there is preferably an aperture 19 between the first and second chambers close to their respective bottom portions 20, 21, see Fig. 3, in the corner 22 of the tank opposite to the third chamber, for moving return fuel to the second chamber, and an aperture 23 for air movement between the first and second chambers close to their respective tops 24, 25, see Figs. 7 and 8, and beside the same side surface 26, see Fig. 8, as the aperture 19, the third chamber being disposed beside the opposite side surface 27 and air movement between the second and third chambers being preferably intended to take place via a gap 28 beside the respective chamber tops 25, 29.

Said first and second inlets are preferably both disposed on the same side surface of the buffer tank, here the side surface 26, while said outlet 8 is disposed on the opposite side surface 27, here close to the buffer tank's bottom portion 30, see Fig. 8, close to the chamber's bottom portion 21.

According to preferred embodiments, e.g. see Figs. 2 and 4, there is a closable aperture 31 which is disposed in the buffer tank's top 22 and communicates with the second chamber, via which aperture said level regulating means are accessible and primary fuel can be supplied to the second chamber.

According to preferred embodiments, said level regulating means 7, see Figs. 7-10, comprise a float-controlled needle valve 32 of a known kind adapted to detecting the undepicted fuel level in the second chamber, whereby primary fuel is intended to be supplied via the needle valve to the second chamber from said second inlet 6.

Also according to preferred embodiments, the volume of at least the first chamber is increased so that the dwell time for return fuel should allow an effective and high degree of deaeration. An appropriate total volume of the buffer tank in such cases is about 5-10 litres, preferably about 7.5 litres, but the volume is generally intended to be adapted to the return fuel flow and the amount of air in such a way that the volume increases with increasing flow.

The buffer tank according to the invention is preferably made of substantially aluminium for good corrosion resistance, low weight and temperature stability.

The function of the buffer tank according to the invention is probably substantially indicated above.

Return fuel is thus supplied to the first chamber via the first inlet. An assured high degree of deaeration takes place during the dwell time in the first chamber. Air separated from the fuel is preferably moved to the second chamber and then to the third chamber and thereafter to the surroundings via valve means 10. The second chamber keeps fuel foam which occurs in the first chamber away from the third chamber's valve means, thereby preventing fuel leakage to the surroundings. The third chamber is preferably connected drainingly to the second chamber for draining of any fuel which nevertheless reaches the third chamber. Deaerated return fuel is supplied to the second chamber from the first chamber via at least one aperture between the chambers 4, 5.

The location of the air aperture 23 relative to the second chamber and the gap 28 prevents leakage of, inter alia, fuel foam to the third chamber and the valve means. The location of the aperture 19 does in principle result in deaerated return fuel being moved to the second chamber.

Compared with the state of the art, the advantages of the buffer tank according to the invention comprise inter alia
- very small amounts of fuel containing air reach the engine;
- more effective deaeration of return fuel by the three-chamber construction;
- simplified fitting and deaeration by directly mounted valves;
- simplified fitting by means of an integrated bracket;
- good accessibility in the tank and possibilities for dealing with fuel supply interruption by replenishment via the closable aperture; and
- corrosion and temperature tolerance by adopting aluminium as preferred tank material.

The invention is described above in relation to preferred versions and embodiment examples.

Further versions and minor modifications and additions are of course conceivable without departing from the basic concept of the invention.

It is therefore preferred that the third chamber be in air contact with the first chamber via only the second chamber, which will thus be in direct air contact with the first chamber.

Versions are nevertheless conceivable with the first chamber in direct air contact with the third chamber, whereby the third chamber may be in direct air contact with the first chamber and/or the second chamber.

Moreover, use of a vertically mounted float-controlled level valve in said level regulating means is preferred in certain cases.

Level regulating means of other kinds are also conceivable, e.g. electrical, electromagnetic, electromechanical etc.

Furthermore, other locations of said inlets 3, 6 and outlet 8 are conceivable in order to adapt to, inter alia, the vehicle's particular pipe system layout.

In the buffer tank design depicted, the third chamber has inter alia certain delineating walls in common with other chambers. Embodiments are nevertheless conceivable in which the third chamber takes the form of an undepicted separate smaller unit fastened in the buffer tank, preferably in an upper portion of the buffer tank, and arranged for air contact and deaeration.

The invention is thus not to be regarded as limited to the embodiments indicated above but may be varied within its scope indicated by the attached claims.

## Claims

1. A buffer tank for accumulation and de-aeration of return fuel for diesel engines, comprising a first inlet which is connected to a return pipe for return fuel from the engine and leads into a return fuel chamber of the buffer tank, an outlet intended to be connected to the engine's fuel inlet via a fuel pump for supply of fuel to the engine from the buffer tank, a second inlet connected to an ordinary fuel tank for supply of fuel to the buffer tank, level regulating means for regulating a fuel level in the buffer tank, and also valve means for evacuation of air supplied to the buffer tank with, inter alia, the return fuel, **characterised by** a first chamber (4) adapted to receiving via said first inlet (3) return fuel for deaeration, by a second chamber (5) adapted to being supplied with return fuel from the first chamber and to being supplied with primary fuel from a primary fuel tank via said level regulating means (7), the second chamber being connected to said outlet (8) of the buffer tank, and by a third chamber (9) disposed in direct air contact with at least one of the other two chambers (4, 5) and adapted to being deaerated via said valve means (10).

2. A tank according to claim 1, **characterised in that** the third chamber is disposed in the upper portion of the tank, preferably a corner portion (13).

3. A tank according to claim 1 or 2, **characterised in that** the second chamber is disposed in direct air contact with the first chamber and the third chamber.

4. A tank according to claim 1, 2 or 3, **characterised in that** the third chamber is in air contact with the first chamber via only the second chamber.

5. A tank according to claim 1, 2, 3 or 4, **characterised by** an aperture (23) for direct air movement between the first chamber (4) and the second chamber (5), preferably close to the chambers' respective tops (24, 25), and also an aperture (19) between the first and second chambers for moving return fuel to the second chamber, preferably close to the chambers' respective bottom portions (20, 21).

6. A tank according to claim 5, **characterised in that** the aperture (23) for direct air movement and the third chamber are respectively disposed beside opposite side surfaces (26, 27) of the tank.

7. A tank according to claim 3, 4, 5 or 6, **characterised in that** direct air movement between the second and third chambers is intended to take place via a gap (28), preferably beside the chambers' respective tops (25, 29).

8. A tank according to any one of claims 1-7, **characterised in that** the third chamber is drainingly connected to the second chamber.

9. A tank according to any one of claims 1-8, **characterised by** a closable aperture (31) which is disposed in the tank's top (1') and through which said level regulating means (7) are accessible and primary fuel can be supplied to the second chamber.

10. A tank according to any one of the foregoing claims, **characterised by** a bracket (2) integrated with the tank to render the tank easy to fit in a vehicle.

11. A tank according to any one of the foregoing claims, **characterised in that** said outlet is disposed in the second chamber's bottom portion (21).

12. A tank according to any one of the foregoing claims, **characterised in that** said level regulating means (7) comprise a float-controlled needle valve (32), which float (33) is adapted to detecting the fuel level in the second chamber.

13. A tank according to any one of the foregoing claims, **characterised in that** said valve means (10) comprises at least one directly mounted valve (11) in the top of the third chamber.

14. A tank according to any one of the foregoing claims, **characterised in that** the buffer tank has a volume of about 5-10 litres, preferably about 7.5 litres.

15. A tank according to any one of the foregoing claims, **characterised in that** it is made of substantially aluminium.

## Patentansprüche

1. Puffertank zur Sammlung und Entlüftung von Kraftstoffrückfluss für Dieselmotoren, umfassend einen ersten Einlass, welcher mit einer Rücklaufleitung für Kraftstoffrückfluss aus dem Motor verbunden ist und in eine Kraftstoffrückflusskammer des Puffertanks führt, einen Auslass, welcher bestimmungsgemäß mit dem Kraftstoffeinlass des Motors mittels einer Kraftstoffpumpe zur Versorgung des Motors mit Kraftstoff aus dem Puffertank verbunden ist, einen zweiten Einlass, welcher mit einem gewöhnlichen Kraftstofftank zur Versorgung des Puffertanks mit Kraftstoff verbunden ist, Pegelsteuerungsmitteln zur Regulierung eines Kraftstoffpegels im Puffertank und ferner Entlüftungsmitteln zum Abtransport von Luft, welche dem Puffertank u.a. durch den Kraftstoffrückfluss zugeführt wird, **gekennzeichnet durch** eine erste Kammer (4) die dazu ausgebildet ist, mittels des ersten Einlasses (3) Kraftstoffrückfluss für eine Entlüftung aufzunehmen, eine zweite Kammer (5) die dazu ausgebildet ist, von der ersten Kammer mit Kraftstoffrückfluss versorgt zu werden und von einem primären Kraftstofftank mittels der Pegelsteuerungsmittel mit primärem Kraftstoff versorgt zu werden, wobei die zweite Kammer mit dem Auslass des Puffertanks verbunden ist, und einer dritten Kammer (9) die in direktem Luftkontakt zu mindestens einer der anderen beiden Kammern (4, 5) angeordnet ist und dazu ausgebildet ist mittels der Entlüftungsmittel (10) entlüftet zu werden.

2. Tank nach Anspruch 1, **dadurch gekennzeichnet, dass** die dritte Kammer im oberen Teil des Tanks angeordnet ist, vorzugsweise in einer Eckposition (13).

3. Tank nach Anspruch 1 oder 2, **dadurch gekennzeichnet, dass** die zweite Kammer in direktem Luftkontakt mit der ersten Kammer und der dritten Kammer angeordnet ist.

4. Tank nach Anspruch 1, 2 oder 3, **dadurch gekennzeichnet, dass** die dritte Kammer nur über die zweite Kammer mit der ersten Kammer in Luftkontakt steht.

5. Tank nach Anspruch 1, 2, 3 oder 4, **gekennzeichnet durch** eine Öffnung (23) für direkte Luftbewegung zwischen der ersten Kammer (4) und der zweiten Kammer (5), vorzugsweise nahe an der jeweiligen Oberseite der Kammern (24, 25), und ferner eine Öffnung (19) zwischen der ersten und zweiten Kammer, um Kraftstoffrückfluss in die zweite Kammer zu bewegen, vorzugsweise nahe an der jeweiligen Unterseite der Kammern (20, 21).

6. Tank nach Anspruch 5, **dadurch gekennzeichnet, dass** die Öffnung (23) für direkte Luftbewegung und die dritte Kammer jeweils neben gegenüberliegenden Oberflächen (26, 27) des Tanks angeordnet sind.

7. Tank nach Anspruch 3, 4, 5 oder 6, **dadurch gekennzeichnet, dass** eine direkte Luftbewegung zwischen der zweiten und dritten Kammer bestimmungsgemäß über einen Spalt (28) stattfindet, vorzugsweise neben den jeweiligen Oberseiten (25, 29) der Kammern.

8. Tank nach einem der Ansprüche 1 - 7, **dadurch gekennzeichnet, dass** die dritte Kammer ableitend mit der zweiten Kammer verbunden ist.

9. Tank nach einem der Ansprüche 1 - 8, **gekennzeichnet durch** eine schließbare Öffnung (31), die in der Oberseite des Tanks (1') angeordnet ist und **durch** die die genannten Pegelregulierungsmittel (7) zugänglich sind und primärer Kraftstoff für die zweite Kammer zuführbar ist.

10. Tank nach einem der vorangehenden Ansprüche, **gekennzeichnet durch** eine in den Tank integrierte Halterung (2) zur einfachen Einpassung des Tanks in ein Fahrzeug.

11. Tank nach einem der vorangehenden Ansprüche, **dadurch gekennzeichnet, dass** der Auslass in dem Unterteil (21) der zweiten Kammer angeordnet ist.

12. Tank nach einem der vorangehenden Ansprüche, **dadurch gekennzeichnet, dass** die Pegelregulierungsmittel (7) ein schwimmergesteuertes Nadelventil (32) umfassen, dessen Schwimmer (33) dazu ausgebildet ist, den Kraftstoffpegel in der zweiten Kammer zu erfassen.

13. Tank nach einem der vorangehenden Ansprüche, **dadurch gekennzeichnet, dass** die Entlüftungsmittel (10) mindestens ein direkt angebrachtes Ventil (11) in der Oberseite der dritten Kammer umfassen.

14. Tank nach einem der vorangehenden Ansprüche, **dadurch gekennzeichnet, dass** der Puffertank ein Volumen von etwa 5 - 10 Litern hat, vorzugsweise etwa 7.5 Liter.

15. Tank nach einem der vorangehenden Ansprüche, **dadurch gekennzeichnet, dass** er im Wesentlichen aus Aluminium besteht.

## Revendications

1. Réservoir tampon pour l'accumulation et la désaération de carburant de retour pour moteurs diesel, comprenant un premier orifice d'entrée qui est relié à un tuyau de retour pour un carburant de retour venant du moteur, et qui mène dans une chambre de carburant de retour du réservoir tampon, un orifice de sortie conçu de façon à être relié à l'orifice d'entrée de carburant du moteur par l'intermédiaire d'une pompe de carburant pour la délivrance de carburant au moteur à partir du réservoir tampon, un deuxième orifice d'entrée relié à un réservoir de carburant ordinaire pour la délivrance de carburant au réservoir tampon, des moyens de régulation de niveau pour réguler un niveau de carburant dans le réservoir tampon, ainsi que des moyens formant vanne pour l'évacuation d'air délivré au réservoir tampon avec, entre autres, le carburant de retour, **caractérisé par** une première chambre (4) adaptée de façon à recevoir par l'intermédiaire dudit premier orifice d'entrée (3) un carburant de retour pour la désaération, par une deuxième chambre (5) adaptée de façon à être alimentée en carburant de retour à partir de la première chambre et à être alimentée en carburant primaire à partir d'un réservoir de carburant primaire par l'intermédiaire desdits moyens de régulation de niveau (7), la deuxième chambre étant reliée audit orifice de sortie (8) du réservoir tampon, et par une troisième chambre (9) disposée en contact d'air direct avec au moins l'une des deux autres chambres (4, 5), et adaptée de façon à être désaérée par lesdits moyens formant vanne (10).

2. Réservoir selon la revendication 1, **caractérisé en ce que** la troisième chambre est disposée dans la partie supérieure du réservoir, de préférence dans une partie de coin (13).

3. Réservoir selon la revendication 1 ou 2, **caractérisé en ce que** la deuxième chambre est disposée en contact d'air direct avec la première chambre et la troisième chambre.

4. Réservoir selon la revendication 1, 2 ou 3, **caractérisé en ce que** la troisième chambre est en contact d'air avec la première chambre uniquement par l'intermédiaire de la deuxième chambre.

5. Réservoir selon la revendication 1, 2, 3 ou 4, **caractérisé par** une ouverture (23) pour un mouvement d'air direct entre la première chambre (4) et la deuxième chambre (5), de préférence à proximité des parties supérieures respectives (24, 25) des chambres, et, également, par une ouverture (19) entre les première et deuxième chambres pour amener du carburant de retour vers la deuxième chambre, de préférence à proximité des parties inférieures respectives (20, 21) des chambres.

6. Réservoir selon la revendication 5, **caractérisé en ce que** l'ouverture (23) pour un mouvement d'air direct et la troisième chambre sont respectivement disposés à côté de surfaces latérales opposées (26, 27) du réservoir.

7. Réservoir selon la revendication 3, 4, 5 ou 6, **caractérisé en ce qu'**il est prévu qu'un mouvement d'air direct entre les deuxième et troisième chambres se produise par l'intermédiaire d'un espace (28), de préférence à côté des parties supérieures respectives (25, 29) des chambres.

8. Réservoir selon l'une quelconque des revendications 1 à 7, **caractérisé en ce que** la troisième chambre est reliée par un drain à la deuxième chambre.

9. Réservoir selon l'une quelconque des revendications 1 à 8, **caractérisé par** une ouverture obturable (31), qui est disposée dans la partie supérieure (1') du réservoir, et à travers laquelle lesdits moyens de régulation de niveau (7) sont accessibles et un carburant primaire peut être délivré à la deuxième chambre.

10. Réservoir selon l'une quelconque des revendications précédentes, **caractérisé par** un étrier (2) intégré au réservoir afin de rendre le réservoir facile à adapter dans un véhicule.

11. Réservoir selon l'une quelconque des revendications précédentes, **caractérisé en ce que** ledit orifice de sortie est disposé dans la partie inférieure (21) de la deuxième chambre.

12. Réservoir selon l'une quelconque des revendications précédentes, **caractérisé en ce que** lesdits moyens de régulation de niveau (7) comprennent une vanne à aiguille commandée par un flotteur (32), ce flotteur (33) étant adapté de façon à détecter le niveau de carburant dans la deuxième chambre.

13. Réservoir selon l'une quelconque des revendications précédentes, **caractérisé en ce que** lesdits moyens formant vanne (10) comprennent au moins une vanne (11) montée directement dans la partie supérieure de la troisième chambre.

14. Réservoir selon l'une quelconque des revendications précédentes, **caractérisé en ce que** le réservoir tampon a un volume compris entre environ 5 et 10 litres, et, de préférence, d'environ 7,5 litres.

15. Réservoir selon l'une quelconque des revendications précédentes, **caractérisé en ce qu'**il est substantiellement réalisé en aluminium.
